# EUROPEAN PATENT APPLICATION

(11) **EP 4 075 534 A1**
(43) Date of publication of application: **19.10.2022**
(21) Application number: 21787835.4
(22) Date of filing: 20.01.2021
(51) Int. Cl.: H01M 4/04, B65H 23/04, B65H 23/26

(54) **SYSTEM AND METHOD FOR TRANSFERRING ELECTRODE SUBSTRATE FROM WINDING ROLL**

(30) Priority: 14.04.2020 KR 20200044947
(71) Applicant: LG Energy Solution, Ltd., Seoul 07335 (KR)
(72) Inventor: LEE, Byeong Kyu, Daejeon 34122 (KR); KWON, Soon Kwan, Daejeon 34122 (KR); CHOI, Seong Won, Daejeon 34122 (KR); JUNG, Su Taek, Daejeon 34122 (KR); JUNG, Tai Jin, Daejeon 34122 (KR); CHO, Ju Hyeon, Daejeon 34122 (KR)
(74) Representative: Plasseraud IP
(86) International application number: PCT/KR2021/095018
(87) International publication number: WO 2021/210971

(57) **Abstract**

The present invention relates to a system and method for transferring an electrode substrate, including a process of pressing an electrode substrate, supplied from a winding roll, in a direction opposite to a winding direction, by using a bending mitigation roller. According to the present invention, it is possible to resolve a bending phenomenon of an electrode substrate supplied from a winding roll and significantly reduce product defects while not lowering the process efficiency.

## Description

### [Technical Field]

This application claims the benefit of priority based on Korean Patent Application No. 10-2020-0044947, filed on April 14, 2020, and the entire contents of the Korean patent application are incorporated herein by reference.

The present invention relates to a system and method for transferring an electrode substrate, and more specifically, to a system and method for transferring an electrode substrate, including a process of pressing an electrode substrate, supplied from a winding roll, in a direction opposite to a winding direction, by using a bending mitigation roller.

### [Background Art]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics.

An electrode applied to a secondary battery is manufactured as follows. An electrode substrate is manufactured through a process of applying an electrode slurry on a current collector formed of a metal foil and drying it, and is then stored in a wound state. Electrodes are manufactured by cutting the wound electrode substrate according to the product specification. However, the wound electrode substrate is bent in a winding direction, and if an electrode is manufactured by using such an electrode substrate, a defect beyond the product specification is generated, and process efficiency is deteriorated. Further, the bent electrode substrate causes a result in which NP ratio of the negative electrode and the positive electrode fails to satisfy the design condition.

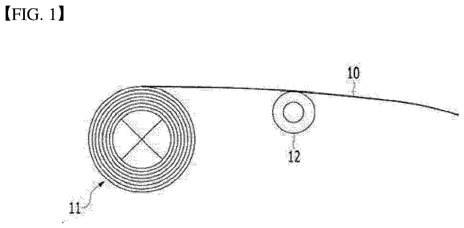

FIG. 1 illustrates a process of transferring an electrode substrate according to a prior art. Referring to FIG. 1, an electrode substrate 10 is in a state that is wound on a winding roll 11.The electrode substrate 10 wound on the winding roll is supplied for a next process, for example, a cutting process. The electrode substrate 10 is transferred through a transfer roller 10, etc., but a bent state of the electrode substrate 10 in the winding direction is maintained, which causes a defect of a product and deteriorates the process efficiency.

Therefore, there is a need for a technology capable of resolving a bent state of an electrode substrate and reducing a product defect when manufacturing an electrode.

### [Disclosure]

### [Technical Problem]

The present invention has been created to solve the above problems, and specifically, an object of the present invention is to provide a system and method for transferring an electrode substrate, including a process of pressing an electrode substrate, supplied from a winding roll, in a direction opposite to a winding direction, by using a bending mitigation roller.

### [Technical Solution]

The present invention relates to a system for transferring an electrode substrate. In one example, a system for transferring an electrode substrate according to the present invention includes: a winding roll on which an electrode substrate is wound; a bending mitigation roller configured to press the electrode substrate supplied from the winding roll, in a direction opposite to a winding direction; and pairs of guide rollers configured to be formed before and after the bending mitigation roller and control a transfer of the electrode substrate.

In one example, the bending mitigation roller has a structure movable in a direction perpendicular to the electrode substrate.

In a specific example, a position of the bending mitigation roller is moved in a direction perpendicular to the electrode substrate, depending on a position at which the electrode substrate is wound on the winding roll.

In one example, the guide rollers are formed by a pair of rollers facing each other, based on the electrode substrate, and the bending mitigation roller is formed as a single roller for pressing the electrode substrate in a direction opposite to the winding direction.

In a specific example, the guide rollers are formed by a pair of rollers facing each other, based on the electrode substrate, respectively, and include a first pair of guide rollers positioned at an upstream region of the bending mitigation roller and a second pair of guide rollers positioned at a downstream region of the bending mitigation roller.

In a specific example, a portion of electrode substrate positioned between the first pair of guide rollers and a portion ofelectrode substrate positioned between the second pair of guide rollers are at a same level, and a level of the electrode substrate pressed by the bending mitigation roller is lower than a level of the electrode substrate positioned between the first and second pair of guide rollers.

In further another example, at least one of the guide rollers includes a heating coil mounted therein.

In a specific example, a heating temperature, at which an electrode substrate is heated by the guide rollers having the heating coil mounted therein, is in a range of 60 to 140°C.

In one example, the electrode substrate applied to the system for transferring an electrode substrate according to the present invention includes: a current collector layer formed of a metal foil; and an electrode mixture layer formed on one or opposite surfaces of the current collector layer.

The present invention further provides a method of transferring an electrode substrate using the above-described system for transferring an electrode substrate. In one example, a method of transferring an electrode substrate includes: a step of controlling a level of an electrode substrate by positioning the electrode substrate, supplied from a winding roll having the electrode substrate wound thereon, between a first pair of guide rollers; a step of pressing the electrode substrate having passed through the first pair of guide rollers in a direction opposite to a winding direction of the electrode substrate by using a bending mitigation roller; and a step of controlling a level of an electrode substrate by positioning the electrode substrate having passed through the bending mitigation roller, between a second pair of guide rollers.

In a specific example, a portion of electrode substrate positioned between the first pair of guide rollers and a portion of electrode substrate positioned between the second pair of guide rollers are at a same level, and a level of the electrode substrate pressed by the bending mitigation roller is lower than a level of the electrode substrate positioned between the first and second pair of guide rollers.

In one example, at least one guide roller of the first and second pair of guide rollers heats the electrode substrate while guiding the electrode substrate. In a specific example, the at least one guide roller of the first and second pair of guide rollers heats the electrode substrate at a temperature of 60 to 140°C.

In further another example, in the step of pressing the electrode substrate, a pressing level is changed while moving a position of the bending mitigation roller in a direction perpendicular to the electrode substrate.

### [Advantageous Effects]

According to a system and method for transferring an electrode substrate according to the present invention, it is possible to resolve a bending phenomenon of an electrode substrate supplied from a winding roll and significantly reduce a product defect while not lowering the process efficiency.

### [Brief Description of the Drawings]

FIGS. 1 and 2 are diagrams schematically showing a conventional electrode substrate transfer process.
FIGS. 3 and 4 are diagrams schematically showing an electrode substrate transfer process according to an embodiment of the present invention, respectively.
FIG. 5 shows photographs of comparing the bending degrees according to a process performance of an electrode substrate supplied from a winding roll.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

The present invention provides a system for transferring an electrode substrate. In one example, a system for transferring an electrode substrate according to the present invention includes: a winding roll on which an electrode substrate is wound; a bending mitigation roller configured to press the electrode substrate supplied from the winding roll, in a direction opposite to a winding direction; and pairs of guide rollers configured to be formed before and after the bending mitigation roller and control a transfer of the electrode substrate.

In the present invention, the guide rollers are formed before and after the bending mitigation roller, respectively. This means that the guide rollers are respectively arranged at the upstream region and the downstream region, based on the transfer flow of the electrode substrate.

The electrode substrate wound on the winding roll is bent in the winding direction even though there may be some changes depending on the diameter of the winding roll or the wound position. In the present invention, the bending mitigation roller resolves the bending state of the electrode substrate by pressing the electrode substrate in a direction opposite to the winding direction. Further, pairs of guide rollers are positioned before and after the bending mitigation roller, respectively. The guide rollers adjust the tension applied to the electrode substrate to a certain level and control the transfer direction of the electrode substrate. In the state that the excessive tension has been applied to the electrode substrate, even though the electrode substrate is pressed using the bending mitigation roller, the bending state is not significantly relieved. In the present invention, the tension of the electrode substrate is controlled by respectively arranging pairs of guide rollers before and after the bending mitigation roller. The bending state of the electrode substrate may be effectively resolved by pressing the electrode substrate controlled by the tension by using the bending mitigation roller.

Further, a system for transferring an electrode substrate according to the present invention may further include a transfer roller for transferring the electrode substrate as necessary. For example, it is possible to further include one or more transfer rollers arranged between the winding roll and the guide rollers and/or after the guide rollers.

In one example, the bending mitigation roller has a structure movable in a direction perpendicular to the electrode substrate. In the present invention, the case where the bending mitigation roller is arranged at a fixed position is possible, but it is possible to effectively control the bending state of the electrode substrate by controlling the location of the bending mitigation roller in a vertical direction. For example, in the case that the diameter of the winding roll is small, the bending degree of the electrode substrate is greater than that in the case that the diameter is large. In this case, the bending of the electrode substrate may be resolved by moving the bending mitigation roller downwards.

In a specific example, a position of the bending mitigation roller is moved in a direction perpendicular to the electrode substrate, depending on a position at which the electrode substrate is wound on the winding roll. For example, even when the electrode substrate is supplied from one winding roll, the bending degree of the electrode substrate is different, depending on the wound position. Namely, the electrode substrate wound relatively inside has a large bending degree, and the electrode substrate wound relatively outside has a small bending degree. In the present invention, the bending of the electrode substrate may be effectively resolved by adjusting the position of the bending mitigation roller depending on the position wound on the winding roll.

In some cases, a system for transferring an electrode substrate according to the present invention further includes a controller for controlling the position of a bending mitigation roller. Further, a user may directly control the controller, but the controller may also be controlled by an automated system. For example, it is possible to form a sensor for measuring a bending degree of an electrode substrate supplied to the downstream region of the winding roll, and the position of the bending mitigation roller may be controlled in response to the measured value of the sensor. For another example, the location of the bending mitigation roller may be controlled according to the process progress degree, based on the database obtained by measuring the bending degree of the electrode substrate according to the winding amount and the diameter of the winding roll.

In one example, the guide rollers are formed by a pair of rollers facing each other, based on the electrode substrate, and the bending mitigation roller is formed as a single roller for pressing the electrode substrate in a direction opposite to the winding direction. In the present invention, the bending mitigation roller may be formed of a pair of rollers facing each other, based on the electrode substrate, but the bending mitigation roller is preferably formed of a single roller in terms of the process efficiency and easiness of location control of the bending mitigation roller.

In a specific example, the guide rollers are formed by a pair of rollers facing each other, based on the electrode substrate, respectively, and include a first pair of guide rollers positioned at an upstream of the bending mitigation roller and a second pair of guide rollers positioned at a downstream region of the bending mitigation roller. In the present invention, first pair of guide rollers and second pair of guide rollers are arranged before and after the bending mitigation roller, respectively. Through this, the tension applied to the electrode substrate is resolved and maintained, the pressing effect by the bending mitigation roller is enhanced.

In the present invention, the level of the electrode substrate pressed by the bending mitigation roller may be controlled to be lower than the level of each electrode substrate positioned between the first and second pair of guide rollers. For example, aportion of electrode substrate positioned between the first pair of guide rollers and a portion of electrode substrate positioned between the second pair of guide rollers are at a same level, and a level of the electrode substrate pressed by the bending mitigation roller is lower than a level of the electrode substrate positioned between the first and second pair of guide rollers.

In the present invention, the level of the electrode substrate is set in consideration of the winding direction, and the direction, in which the bending of the wound electrode substrate is relieved, set as an upper level. For example, as illustrated in FIG. 1, when the electrode substrate 10 is wound on the winding roll 11, the upward direction becomes the upper level, and the downward direction becomes the lower level. In comparison with FIG. 1, in the case that the electrode substrate 10 is wound in a direction opposite to that of the winding roll 11, the level of the electrode substrate 10 should be set to be opposite.

In further another example, at least one of the guide rollers includes a heating coil mounted therein. For example, the guide roller includes 4 rollers formed as first and second pair of guide rollers, and all of the 4 rollers have a heating coil mounted therein. Alternatively, any one of the first pair of guide rollers and any one of the second pair of guide rollers have a heating coil mounted therein, respectively. Through this, guide rollers having a heating coil mounted therein guide and heat the electrode substrate. Heating the electrode substrate is effective for resolving tension or stress applied to the electrode substrate and may maximize the effect of relieving the bending by the bending mitigation roller.

In a specific example, a heating temperature, at which an electrode substrate is heated by the guide rollers having the heating coil mounted therein, is in a range of 60 to 140°C.The heating temperature may be, for example, in a range of 60 to 100°C, 90 to 140°C, or 85 to 110°C.The heating temperature is in a range for resolving tension for the electrode substrate and effectively removing a bending state. When the heating temperature is lower than the above range, the heating effect is low, and when it is higher than the above range, the process efficiency is deteriorated and may cause deformation of the electrode substrate.

In one example, the electrode substrate includes: a current collector layer formed of a metal foil; and an electrode mixture layer formed on one or opposite surfaces of the current collector layer. The electrode substrate may be an electrode substrate for a positive electrode and/or a negative electrode.

The present invention further provides a method of transferring an electrode substrate using the above-described system for transferring an electrode substrate. In one example, a method of transferring an electrode substrate includes: a step of controlling a level of an electrode substrate by positioning the electrode substrate, supplied from a winding roll having the electrode substrate wound thereon, between a first pair of guide rollers; a step of pressing the electrode substrate having passed through the first pair of guide rollers in a direction opposite to a winding direction of the electrode substrate by using a bending mitigation roller; and a step of controlling a level of an electrode substrate by positioning the electrode substrate having passed through the bending mitigation roller, between a second pair of guide rollers.

For example, in the present invention, the above-mentioned steps may be sequentially or consecutively performed.

In the present invention, the level of the electrode substrate is controlled by using the first and second pair of guide rollers and the bending mitigation roller. The bending mitigation roller resolves the bending state of the electrode substrate by pressing the electrode substrate in a direction opposite to the winding direction. Further, the first and second pair of guide rollers resolve or adjust tension applied to the electrode substrate to a certain level and control the transfer direction of the electrode substrate. In the present invention, the bending state of the electrode substrate may be effectively resolved by pressing the electrode substrate controlled by the tension by using the bending mitigation roller.

Further, a method for transferring an electrode substrate according to the present invention may further include a step of passing through a transfer roller for transferring the electrode substrate as necessary. For example, it is possible to further include one or more transfer rollers arranged between the winding roll and the first pair of guide rollers and/or after the second pair of guide rollers.

In one example, in the present invention, the level of the electrode substrate pressed by the bending mitigation roller may be controlled to be lower than the level of each electrode substrate positioned between the first and second pair of guide rollers. For example, a portion of electrode substrate positioned between the first pair of guide rollers and a portion of electrode substrate positioned between the second pair of guide rollers are at a same level, and a level of the electrode substrate pressed by the bending mitigation roller is lower than a level of the electrode substrate positioned between the first and second pair of guide rollers.

In another example, at least one of the first and second pair of guide rollers heats the electrode substrate together with a guide to the electrode substrate. Specifically, at least one of the guide rollers has a heating coil mounted therein, and the roller heated by the heating coil increases the temperature of the electrode substrate while contacting the electrode substrate. For example, all of 4 rollers forming first and second pair of guide rollers heat the electrode substrate. Alternatively, any one of the first pair of guide rollers and any one of the second pair of guide rollers heat the electrode substrate. Heating the electrode substrate is effective for resolving tension or stress applied to the electrode substrate and may maximize the effect of relieving the bending by the bending mitigation roller.

In a specific example, at least one of the first and second pair of guide rollers heats the electrode substrate at a temperature of 60 to 140°C.The heating temperature may be, for example, in a range of 60 to 100°C, 90 to 140°C, or 85 to 110°C.The heating temperature is in a range for resolving tension for the electrode substrate and effectively removing a bending state. When the heating temperature is lower than the above range, the heating effect is low, and when it is higher than the above range, the process efficiency is deteriorated and may cause deformation of the electrode substrate.

In further another example, in the step of pressing the electrode substrate, a pressing level is changed while moving a position of the bending mitigation roller in a direction perpendicular to the electrode substrate.

Specifically, in the pressing step, the pressing level is changed as moving the bending mitigation roller in a direction perpendicular to the electrode substrate.

For example, in the case that the diameter of the winding roll is small, the bending degree of the electrode substrate is greater than that in the case that the diameter is large. In this case, the pressing degree for the electrode substrate is enhanced by moving the bending mitigation roller downwards.

For another example, a bending degree of the electrode substrate may be changed according to the winding position of the winding roll. Namely, the electrode substrate wound relatively inside has a large bending degree, and the electrode substrate wound relatively outside has a small bending degree. In the present invention, the degree of pressing the electrode substrate may be controlled by adjusting the position of the bending mitigation roller depending on the position wound on the winding roll.

In some cases, a system for transferring an electrode substrate according to the present invention further includes a controller for controlling the position of a bending mitigation roller. Further, a user may directly control the controller, but the controller may also be controlled by an automated system. For example, it is possible to form a sensor for measuring a bending degree of an electrode substrate supplied to the downstream region of the winding roll, and the position of the bending mitigation roller may be controlled in response to the measured value of the sensor, thereby changing the degree of pressing the electrode substrate. For another example, the location of the bending mitigation roller may be controlled according to the process progress degree, based on the database obtained by measuring the bending degree of the electrode substrate according to the winding amount and the diameter of the winding roll.

In one example, the electrode substrate mentioned in the present invention is a substrate applicable as an electrode for a secondary battery. Specifically, the electrode is a positive electrode and/or a negative electrode of a lithium secondary battery.

The positive electrode has a structure in which a positive electrode mixture layer is formed on one or opposite sides of a positive electrode current collector. In one example, the positive electrode mixture layer includes a positive electrode active material, a conductive material and a binder polymer, etc. and if necessary, may further include a positive electrode additive commonly used in the art.

The positive electrode active material may be a lithium-containing oxide, and may be the same or different.A lithium-containing transition metal oxide may be used as the lithium-containing oxide.

For example, the lithium-containing transition metal oxide may be any one or a mixture of two or more selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), and the lithium-containing transition metal oxide may be coated with a metal or metal oxide such as aluminum (Al).Further, in addition to the lithium-containing transition metal oxide, at least one selected from the group consisting of sulfide, selenide, and halide may be used.

The positive electrode active material may be included in the range of 94.0 to 98.5 wt% in the positive electrode mixture layer. When the content of the positive electrode active material satisfies the above range, it is advantageous in terms of manufacturing a high-capacity battery and providing sufficient conductivity of the positive electrode or adhesion between electrode materials.

The current collector used for the positive electrode is a metal having high conductivity, and any metal which the positive electrode active material slurry may be easily attached to and which is not reactive in the voltage range of the electrochemical device can be used. Specifically, non-limiting examples of the current collector for the positive electrode include aluminum, nickel, or a foil manufactured by a combination thereof.

The positive electrode mixture layer further includes a conductive material. The conductive material is usually added in an amount of 1 to 30% by weight based on the total weight of the mixture including the positive electrode active material. Such a conductive material is not particularly limited as long as it has conductivity without causing a chemical change in the secondary battery. For example, one or more selected from the group consisting of graphite such as natural graphite or artificial graphite; carbon black such as carbon black, acetylene black, ketjen black, channel black, furnace black, lamp black, or thermal black; conductive fiber such as carbon fiber or metal fiber; metal powder such as carbon fluoride, aluminum, or nickel powder; conductive whiskey such as zinc oxide or potassium titanate; conductive metal oxide such as titanium oxide; and polyphenylene derivative may be used as the conductive material.

The negative electrode has a structure in which a negative electrode mixture layer is formed on one or opposite sides of a negative electrode current collector. In one example, the negative electrode mixture layer includes a negative electrode active material, a conductive material, and a binder polymer, and if necessary, may further include a negative electrode additive commonly used in the art.

The negative electrode active material may include a carbon material, lithium metal, silicon or tin. When a carbon material is used as the negative electrode active material, both low crystalline carbon and high crystalline carbon may be used. Representative examples of low crystalline carbon include soft carbon and hard carbon are typical. Representative examples of high crystalline carbon include one or more selected from the group consisting of natural graphite, kish graphite, pyrolytic carbon, mesophase pitch based carbon fiber, mesocarbon microbeads, mesophase pitches, and high-temperature calcined carbons such as petroleum or coal tar pitch derived cokes.

Non-limiting examples of the current collector used for the negative electrode include copper, gold, nickel, or a foil manufactured by a copper alloy or a combination thereof. In addition, the current collector may be used by stacking substrates made of the above materials.

In addition, the negative electrode may include a conductive material and a binder commonly used in the art.

Hereinafter, the present invention will be described in more detail through drawings and examples. As the inventive concept allows for various changes and numerous embodiments, particular embodiments will be illustrated in the drawings and described in detail in the text. However, this is not intended to limit the present invention to the specific form disclosed, and it should be understood to include all changes, equivalents, and substitutes included in the spirit and scope of the present invention.

### (Conventional embodiment)

FIG. 1 illustrates a process of transferring an electrode substrate according to a prior art. Referring to FIG. 1, the electrode substrate 10 wound on the winding roll 11 is supplied for a next process, for example, a cutting process. The electrode substrate 10 is transferred through a transfer roller 10, etc., but a bent state of the electrode substrate 10 in the winding direction is maintained, which causes a defect of a product and deteriorates the process efficiency.

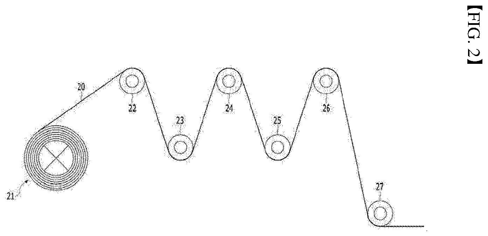

FIG. 2 illustrates a process of transferring an electrode substrate as another example of according to a prior art. Referring to FIG. 2, an electrode substrate 20 is in a state that is wound on a winding roll 21.The electrode substrate 20 wound on the winding roll 21 is supplied for a next process. The electrode substrate 20 passes through a multiple of transfer rollers 22 to 27.For example, among the transfer rollers 22 to 27, some transfer rollers 23 and 25 press the electrode substrate 20 in a direction opposite to the winding direction. However, in FIG. 2, the tension of the electrode substrate 20 has not been resolved, and a separate heating process is not included. The inventors of the present invention found that the bending state of the electrode substrate has not been sufficiently relieved by only passing through transfer rollers 22 to 27 as shown in FIG. 2.

### (First embodiment)

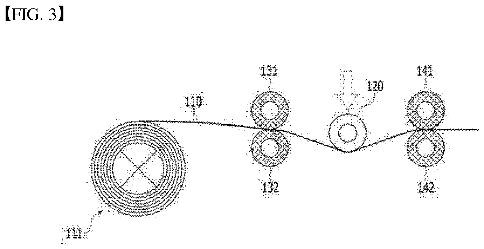

FIG. 3 is diagram schematically showing an electrode substrate transfer process according to an embodiment of the present invention. Referring to FIG. 3, the electrode substrate 110 is in a state that is wound on the winding roll 111, and the electrode substrate 110 wound on the winding roll 111 is supplied for a next process. In such a transfer process, the electrode substrate 110 sequentially passes through the first pair of guide rollers 131 and 132, the bending mitigation roller 120, and the second pair of guide rollers 141 and 142.

The first and second pair of guide rollers 131, 132, 141 and 142 form a pair of rollers facing each other while having the electrode substrate 110 therebetween, respectively. Further, the bending mitigation roller 120 is formed as a single roll which presses the electrode substrate 110 in a downward direction which is opposite to the winding direction.

The electrode substrate 110 positioned between the first pair of guide rollers 131 and 132 and the electrode substrate 110 positioned between the second pair of guide rollers 141 and 142 are at the same level. Further, the level of the electrode substrate 110 at a point that is pressed by the bending mitigation roller 120 is lower than the level of each electrode substrate 110 positioned respectively between the first and second pair of guide rollers 131, 132, 141 and 142.

### (Second embodiment)

On the basis of FIG. 3, for example, among the first pair of guide rollers 131 and 132, the upper guide roller 131 has a heating coil mounted therein, and the lower guide roller 132 does not have a heating coil mounted therein. Further, among the second pair of guide rollers 141 and 142, the upper guide roller 141 has a heating coil mounted therein, and the lower guide roller 142 does not have a heating coil mounted therein. Through this, the electrode substrate 110 may be heated, centering on the top surface, and the relieving of the bending may be assisted by the bending mitigation roller 120.

### (Third embodiment)

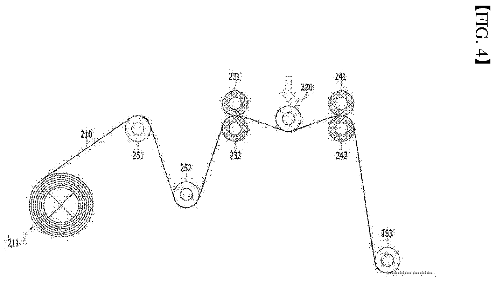

FIG. 4 is diagram schematically showing an electrode substrate transfer process according to another embodiment of the present invention. Referring to FIG. 4, the electrode substrate 210 is in a state that is wound on the winding roll 211, and the electrode substrate 210 wound on the winding roll 211 is supplied for a next process. In such a transfer process, the electrode substrate 210 passes through transfer rollers 251 and 252 to thereby reach first pair of guide rollers 231 and 232.The electrode substrate 210, which is transferred to the first pair of guide rollers 231 and 232, sequentially passes through the bending mitigation roller 220 and the second pair of guide rollers 241 and 242.Thereafter, the electrode substrate 210 is transferred for a next step after passing through another transfer roller 253.

The first and second pair of guide rollers 231, 232, 241 and 242 are formed of a pair of rollers facing each other while having the electrode substrate 210 therebetween, respectively, and tension applied to the electrode substrate is resolved. The tension-resolved electrode substrate 210 is pressed in a downward direction which is opposite to the winding direction while passing through the bending mitigation roller 120.

Further, the electrode substrate 210 positioned between the first pair of guide rollers 231 and 232 and the electrode substrate 210 positioned between the second pair of guide rollers 241 and 242 are at the same level. Further, the level of the electrode substrate 210 at a point that is pressed by the bending mitigation roller 220 is lower than the level of each electrode substrate 210 positioned respectively between the first and second pair of guide rollers 231, 232, 241 and 242.

### (Fourth embodiment)

On the basis of FIG. 4, in another example, the first and second pair of guide rollers 231, 232, 241 and 242 have a heating coil mounted therein, respectively. Through this, the first and second pair of guide rollers guide and heat the electrode substrate 210.The relieving of the bending of the electrode substrate 210 may be maximized by the bending mitigation roller 220 by heating the electrode substrate 210 through the guide rollers 231, 232, 241 and 242.

Hereinafter, the present invention will be described in more detail through examples.

### Example 1

The transfer process as illustrated in FIG. 4 was performed for the electrode substrate wound on the winding roll. Specifically, the transfer process was performed for the electrode substrate wound on the winding roll of a diameter of 50 mm.

### Example 2

The transfer process was performed in the same manner as in Example 1 except that the electrode substrate was heated at 100°C using each guide roller.

### Comparative Example 1

A separate transfer process was not applied for the electrode substrate would on the winding roll of a diameter of 50 mm.

### Comparative Example 2

The transfer process as illustrated in FIG. 2 was performed for the electrode substrate wound on the winding roll. Specifically, the transfer process was performed for the electrode substrate wound on the winding roll of a diameter of 50 mm.

In the above examples and comparative examples, the diameter of the winding roll, the winding amount of the electrode substrate, and the transfer rate were controlled to be the same.

### Experimental Example: Evaluation on bending of electrode substrate for specimen

The bending degrees of the electrode substrate according to respectively examples and comparative examples were compared and evaluated. Specifically, each electrode substrate was cut to become specimens of 15 cm, and the specimens were placed on a flat floor and the bending degrees were measured. The specimen at a point corresponding to 10% length of the external side of the winding roll (outer side specimen of the winding roll) and the specimen at a point corresponding to 10% length of the internal side of the winding roll (inner side specimen of the winding roll) were used for measurement.The evaluation result is shown in Table 1 below.

**[Table 1]**

| Example No. | Bending degree of inner side specimen of winding roll (mm) | Bending degree of outer side specimen of winding roll (mm) |
|---|---|---|
| Comparative | 30 | 16 |
| Example 1 | | |
| Comparative Example 2 | 16 | 11 |
| Example 1 | 8 | 7 |
| Example 2 | 3 | 3 |

Referring to Table 1, in comparative example 1 of the electrode substrate, which has not passed through a separate transfer process, the bending degree of the inner side specimen of the winding roll is at a 30 mm level, and the bending degree of the outer side specimen of the winding roll is at a 16 mm level.

In the case of Comparative example 2 in which the existing transfer process was performed, the bending degree of the electrode substrate was somewhat reduced. Specifically, in the inner side specimen which has been severely bent, the bending degree has been significantly reduced from 30 mm to 16 mm level. However, the bending degree of the outer side specimen reduced from 16 mm to 11 mm, which was not a significant reduce, which showed that it was not possible to significantly reduce the bending degree of the electrode substrate by using the existing transfer method. In particular, the difference of the bending degree between the inner side specimen and the outer side specimen still reached 5 mm, which corresponded to a level at which the process uniformity could not be maintained.

In this regard, in the case of Example 1, the bending degree of the inner side specimen of the winding roll was about 8 mm, and the bending degree of the outer side specimen of the winding roll was about 7 mm. Herein, the bending degrees were satisfactory, and the difference of the bending degrees was only about 1 mm. Further, in the case of Example 2, the bending degrees of the both the inner side specimen of the winding roll and the outer side specimen of the winding roll all was about 3 mm, which was very satisfactory, and the difference of the bending degrees between the inner side specimen and the outer side specimen was very small.

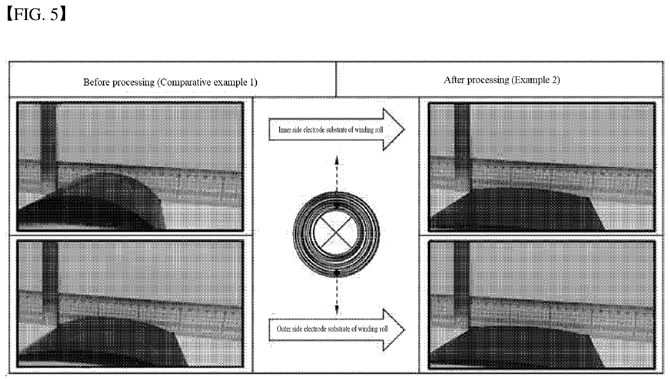

FIG. 5 shows evaluation results performed in experimental examples. Referring to FIG. 5, the left photographs illustrate the bending degree evaluation process of the specimen according to comparative example 1, and the right photographs illustrate the bending degree evaluation process of the specimen according to example 2.Through FIG. 5, it is seen that the bending degree of the electrode substrate having passed through the transfer process according to the present invention has significantly reduced.

In the above, the present invention has been described in more detail through the drawings and examples. Accordingly, the embodiments described in the specification and the configurations described in the drawings are only the most preferred embodiments of the present invention, and do not represent all of the technical ideas of the present invention. It is to be understood that there may be various equivalents and variations in place of them at the time of filing the present application.

## Claims

1. A system for transferring an electrode substrate, comprising:
a winding roll on which an electrode substrate is wound;
a bending mitigation roller configured to press the electrode substrate supplied from the winding roll, in a direction opposite to a winding direction; and
pairs of guide rollers configured to be formed before and after the bending mitigation roller and control a transfer of the electrode substrate.

2. The system of claim 1, wherein the bending mitigation roller has a structure movable in a direction perpendicular to the electrode substrate.

3. The system of claim 1, wherein a position of the bending mitigation roller is moved in a direction perpendicular to the electrode substrate, depending on a position at which the electrode substrate is wound on the winding roll.

4. The system of claim 1, wherein the guide rollers are formed by a pair of rollers facing each other, based on the electrode substrate, and
wherein the bending mitigation roller is formed as a single roller for pressing the electrode substrate in a direction opposite to the winding direction.

5. The system of claim 1, wherein the guide rollers are formed by a pair of rollers facing each other, based on the electrode substrate, respectively, and include a first pair of guide rollers positioned at an upstream region of the bending mitigation roller and a second pair of guide rollers positioned at a downstream region of the bending mitigation roller.

6. The system of claim 5, wherein a portion of electrode substrate positioned between the first pair of guide rollers and a portion of electrode substrate positioned between the second pair of guide rollers are at a same level, and
wherein a level of the electrode substrate pressed by the bending mitigation roller is lower than a level of the electrode substrate positioned between the first and second pair of guide rollers.

7. The system of claim 1, wherein at least one of the guide rollers includes a heating coil mounted therein.

8. The system of claim 7, wherein a heating temperature, at which an electrode substrate is heated by the guide rollers having the heating coil mounted therein, is in a range of 60 to 140°C.

9. The system of claim 1, wherein the electrode substrate includes: a current collector layer formed of a metal foil; and an electrode mixture layer formed on one or opposite surfaces of the current collector layer.

10. A method of transferring an electrode substrate, comprising:
a step of controlling a level of an electrode substrate by positioning the electrode substrate, supplied from a winding roll having the electrode substrate wound thereon, between a first pair of guide rollers;
a step of pressing the electrode substrate having passed through the first pair of guide rollers in a direction opposite to a winding direction of the electrode substrate by using a bending mitigation roller; and
a step of controlling a level of an electrode substrate by positioning the electrode substrate having passed through the bending mitigation roller, between a second pair of guide rollers.

11. The method of claim 10, wherein a portion of electrode substrate positioned between the first pair of guide rollers and a portion of electrode substrate positioned between the second pair of guide rollers are at a same level, and
wherein a level of the electrode substrate pressed by the bending mitigation roller is lower than a level of the electrode substrate positioned between the first and second pair of guide rollers.

12. The method of claim 10, wherein at least one of the first and second pair of guide rollers heats the electrode substrate together with a guide to the electrode substrate.

13. The method of claim 12, wherein at least one of the first and second pair of guide rollers heats the electrode substrate at a temperature of 60 to 140°C.

14. The method of claim 10, wherein in the step of pressing the electrode substrate, a pressing level is changed while moving a position of the bending mitigation roller in a direction perpendicular to the electrode substrate.
